# EUROPEAN PATENT APPLICATION

(11) **EP 4 502 339 A1**
(43) Date of publication of application: **05.02.2025**
(21) Application number: 24192180.8
(22) Date of filing: 31.07.2024
(51) Int. Cl.: F01D 5/00, B23P 6/00, F01D 21/00, F01D 25/28

(54) **SYSTEM AND METHOD FOR RECORDING COMPONENT REPLACEMENT DATA**

(30) Priority: 31.07.2023 US 202318228441
(71) Applicant: PRATT & WHITNEY CANADA CORP., Longueuil, Québec J4G 1A1 (CA)
(72) Inventor: GHARAGOZLOO, Alireza, (01BE5) Longueuil, J4G 1A1 (CA); TABAR, Roja, (01BE5) Longueuil, J4G 1A1 (CA)
(74) Representative: Dehns

(57) **Abstract**

An assembly (74) for recording rotor blade replacement data for a bladed rotor (86) includes an imaging device (78) and a processing system (76). The imaging device (78) is configured to capture image data for the bladed rotor (86) including a plurality of rotor blades (88). The processing system (76) is configured to identify each of the plurality of rotor blades (88) installed on the bladed rotor (86) in pre-repair image data of the captured image data and store a pre-repair position of each of the identified plurality of rotor blades (88) installed on the bladed rotor (86) in the pre-repair image data, identify each of the plurality of rotor blades (88) installed on the bladed rotor (86) in post-repair image data and store a post-repair position of each of the identified plurality of rotor blades (88) installed on the bladed rotor (86) in the post-repair image data, and identify at least one replaced rotor blade installed on the bladed rotor (86) in the post-repair image data using the pre-repair image data and the post-repair image data.

## Description

### TECHNICAL FIELD

This disclosure relates generally to systems and methods for recording component replacement data and, more particularly, to recording component replacement data for gas turbine engine rotor blades.

### BACKGROUND OF THE ART

A bladed rotor for an aircraft gas turbine engine may generally include a plurality of rotor blades distributed about the bladed rotor. These rotor blades may be subject to inspection and/or maintenance at various intervals and, in some cases, one or more of the rotor blades may be replaced with new rotor blades. Various systems and methods are known in the art for managing rotor blade inspections and repairs. While these known systems and methods have various advantages, there is still room in the art for improvement.

### SUMMARY

It should be understood that any or all of the features or embodiments described herein can be used or combined in any combination with each and every other feature or embodiment described herein unless expressly noted otherwise.

According to an aspect of the present disclosure, an assembly for recording rotor blade replacement data for a bladed rotor of an aircraft gas turbine engine includes an imaging device and a processing system. The imaging device is configured to capture image data for the bladed rotor. The bladed rotor includes a plurality of rotor blades. The processing system includes a processor in communication with a non-transitory memory storing instructions, which instructions when executed by the processor, cause the processor to identify each of the plurality of rotor blades installed on the bladed rotor in pre-repair image data of the captured image data from the imaging device and store a pre-repair position of each of the identified plurality of rotor blades installed on the bladed rotor in the pre-repair image data in the memory, identify each of the plurality of rotor blades installed on the bladed rotor in post-repair image data of the captured image data from the imaging device and store a post-repair position of each of the identified plurality of rotor blades installed on the bladed rotor in the post-repair image data in the memory, and identify at least one replaced rotor blade of the plurality of rotor blades installed on the bladed rotor in the post-repair image data using the pre-repair image data and the post-repair image data.

In any of the aspects or embodiments described above and herein, the instructions, when executed by the processor, may further cause the processor to index the identified at least one replaced rotor blade in a database.

In any of the aspects or embodiments described above and herein, the instructions, when executed by the processor, may further cause the processor to store a usage parameter in the database for each of the identified at least one replaced rotor blade.

In any of the aspects or embodiments described above and herein, the instructions, when executed by the processor, may further cause the processor to store the post-repair position in the database for each of the identified at least one replaced rotor blade.

In any of the aspects or embodiments described above and herein, the instructions, when executed by the processor, may further cause the processor to identify the installation position for each of the identified at least one replaced rotor blade using a reference point of the bladed rotor.

In any of the aspects or embodiments described above and herein, the instructions, when executed by the processor, may further cause the processor to identify the at least one replaced rotor blade using one or more visually-distinguishing characteristics of each of the at least one replaced rotor blade. The visually-distinguishing characteristics may include one or more of a rotor blade coloration, a rotor blade length, or a rotor blade shape.

In any of the aspects or embodiments described above and herein, the instructions, when executed by the processor, may further cause the processor to identify the at least one replaced rotor blade using a machine learning model.

In any of the aspects or embodiments described above and herein, the at least one replaced rotor blade may include a new rotor blade and the new rotor blade was not one of the identified plurality of rotor blades installed on the bladed rotor in pre-repair image data.

In any of the aspects or embodiments described above and herein, the at least one replaced rotor blade may include a reinstalled rotor blade of the plurality of rotor blades. The at least one replaced rotor blade may have a first position in the identified plurality of rotor blades installed on the bladed rotor in pre-repair image data. The at least one replaced rotor blade may have a second position in the identified plurality of rotor blades installed on the bladed rotor in post-repair image data. The first position may be different than the second position.

In any of the aspects or embodiments described above and herein, the image data may include a single digital image of the plurality of rotor blades.

In any of the aspects or embodiments described above and herein, the image data may include a plurality of digital images of the plurality of rotor blades.

According to another aspect of the present disclosure, a method for recording rotor blade replacement data for bladed rotor of an aircraft gas turbine engine includes capturing pre-repair image data of a plurality of rotor blades installed on a bladed rotor, replacing one or more of the plurality of rotor blades installed on the bladed rotor, capturing post-repair image data of a plurality of rotor blades installed on a bladed rotor subsequent to replacing the one or more of the plurality of rotor blades on the bladed rotor, identifying, with a processing system, each of the plurality of rotor blades installed on the bladed rotor in post-repair image data, and recording blade replacement data for the plurality of rotor blades by identifying, with the processing system, at least one replaced rotor blade of the plurality of rotor blades installed on the bladed rotor in the post-repair image data using the pre-repair image data and the post-repair image data and indexing the identified at least one replaced rotor blade in a database.

In any of the aspects or embodiments described above and herein, recording the blade replacement data may further include storing a usage parameter in the database for each of the identified at least one replaced rotor blade.

In any of the aspects or embodiments described above and herein, recording the blade replacement data may further include storing an installation position in the database for each of the identified at least one replaced rotor blade.

In any of the aspects or embodiments described above and herein, the method may further include identifying one or more failed rotor blades of the plurality of rotor blades subsequent to capturing the pre-repair image data and prior to capturing the post-repair image data.

In any of the aspects or embodiments described above and herein, replacing the one or more of the plurality of rotor blades installed on the bladed rotor includes replacing the one or more failed rotor blades.

According to another aspect of the present disclosure, an assembly for recording component replacement data for a component assembly of an aircraft gas turbine engine includes an imaging device and a processing system. The imaging device is configured to capture image data for the component assembly. The component assembly includes a plurality of components. The processing system including a processor in communication with a non-transitory memory storing instructions, which instructions when executed by the processor, cause the processor to identify each of the plurality of components installed on the component assembly in pre-repair image data of the captured image data from the imaging device and store, identify each of the plurality of components installed on the component assembly in post-repair image data of the captured image data from the imaging device, and record component replacement data for the plurality of components by identifying at least one replaced component of the plurality of components installed on the component assembly in the post-repair image data using the pre-repair image data and the post-repair image data and indexing the identified at least one replaced component in a database of the memory.

In any of the aspects or embodiments described above and herein, the instructions, when executed by the processor, may further cause the processor to store a usage parameter in the database for each of the identified at least one replaced components.

In any of the aspects or embodiments described above and herein, the at least one replaced component may include a new component and the new component was not one of the identified plurality of components installed on the component assembly in pre-repair image data.

In any of the aspects or embodiments described above and herein, the at least one replaced component may include a reinstalled component of the plurality of components. The at least one replaced component may have a first position in the identified plurality of components installed on the component assembly in pre-repair image data. The at least one replaced component may have a second position in the identified plurality of components installed on the component assembly in post-repair image data. The first position may be different than the second position.

The present disclosure, and all its aspects, embodiments and advantages associated therewith will become more readily apparent in view of the detailed description provided below, including the accompanying drawings.

### BRIEF DESCRIPTION OF THE DRAWINGS

FIG. 1 schematically illustrates a cutaway, side view of a gas turbine engine for an aircraft propulsion system, in accordance with one or more embodiments of the present disclosure.
FIG. 2 illustrates perspective view of a rotor including a bladed disk, in accordance with one or more embodiments of the present disclosure.
FIG. 3 schematically illustrates a blade tracking assembly, in accordance with one or more embodiments of the present disclosure.
FIG. 4 illustrates a block diagram depicting a method for tracking blades for a bladed disk, in accordance with one or more embodiments of the present disclosure.
FIGS. 5A-C illustrate views of a portion of a bladed disk for a blade replacement sequence, in accordance with one or more embodiments of the present disclosure.
FIGS. 6A-C illustrate views of a portion of a bladed disk for another blade replacement sequence, in accordance with one or more embodiments of the present disclosure.

### DETAILED DESCRIPTION

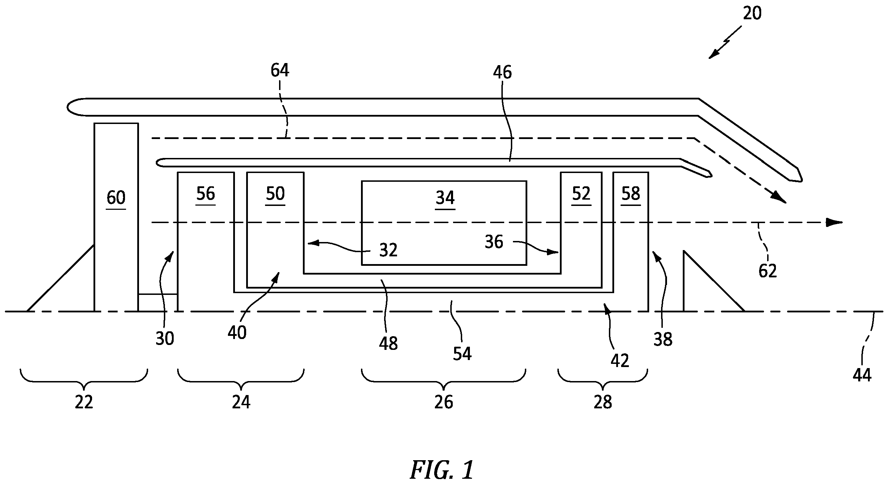

FIG. 1 schematically illustrates a gas turbine engine 20. The gas turbine engine 20 of FIG. 1 is a multi-spool turbofan gas turbine engine for an aircraft propulsion system. However, while the following description and accompanying drawings may refer to the turbofan gas turbine engine 20 of FIG. 1 as an example, it should be understood that aspects of the present disclosure may be equally applicable to other types of gas turbine engines including, but not limited to, a turboshaft gas turbine engine, a turboprop gas turbine engine, a turbojet gas turbine engine, a propfan gas turbine engine, or an open rotor gas turbine engine. Moreover, the present disclosure may also be equally applicable to rotational equipment other than gas turbine engines.

The gas turbine engine 20 of FIG. 1 includes a fan section 22, a compressor section 24, a combustor section 26, and a turbine section 28. For example, the compressor section 24 of FIG. 1 includes a low-pressure compressor (LPC) 30 and a high-pressure compressor (HPC) 32, the combustor section 26 includes a combustor 34 (e.g., an annular combustor), and the turbine section 28 includes a high-pressure turbine (HPT) 36 and a low-pressure turbine (LPT) 38.

The gas turbine engine 20 sections 22, 24, 28 form a first rotational assembly 40 (e.g., a high-pressure spool) and a second rotational assembly 42 (e.g., a low-pressure spool) of the gas turbine engine 20. The first rotational assembly 40 and the second rotational assembly 42 are mounted for rotation about a rotational axis 44 (e.g., an axial centerline of the gas turbine engine 20) relative to the engine static structure 46 of the gas turbine engine 20. The engine static structure 46 may include one or more engine cases, cowlings, bearing assemblies, and/or other non-rotating structures configured to house and/or support components of the gas turbine engine 20 sections 22, 24, 26, 28.

The first rotational assembly 40 includes a first shaft 48, a bladed first compressor rotor 50 for the high-pressure compressor 32, and a bladed first turbine rotor 52 for the high-pressure turbine 36. The first shaft 48 interconnects the bladed first compressor rotor 50 and the bladed first turbine rotor 52.

The second rotational assembly 42 includes a second shaft 54, a bladed second compressor rotor 56 for the low-pressure compressor 30, and a bladed second turbine rotor 58 for the low-pressure turbine 38. The second shaft 54 interconnects the bladed second compressor rotor 56 and the bladed second turbine rotor 58. The second shaft 54 of FIG. 1 additionally interconnects the bladed second compressor rotor 56 and the bladed second turbine rotor 58 with a bladed fan rotor 60 for the fan section 22. The second shaft 54 may alternatively be coupled to the bladed fan rotor 60 (e.g., an input shaft of the bladed fan rotor 60) by a reduction gear assembly configured to drive the bladed fan rotor 60 at a reduced rotational speed relative to the second shaft 54.

In operation of the gas turbine engine 20 of FIG. 1, ambient air is directed through the fan section 22 and into a core flow path 62 and a bypass flow path 64 by rotation of the bladed fan rotor 60. Airflow along the core flow path 62 is compressed by the low-pressure compressor 30 and the high-pressure compressor 32, mixed and burned with fuel in the combustor 34, and then directed through the high-pressure turbine 36 and the low-pressure turbine 38. The bladed first turbine rotor 52 and the bladed second turbine rotor 58 rotationally drive the first rotational assembly 40 and the second rotational assembly 42, respectively, in response to the combustion gas flow through the high-pressure turbine 36 and the low-pressure turbine 38. The first shaft 48 and the second shaft 54 are concentric and rotate about the rotational axis 44. The present disclosure, however, is not limited to concentric configurations of the first shaft 48 and the second shaft 54 and the first shaft 48 and the second shaft 54 may alternatively be configured for rotation about discrete rotational axes.

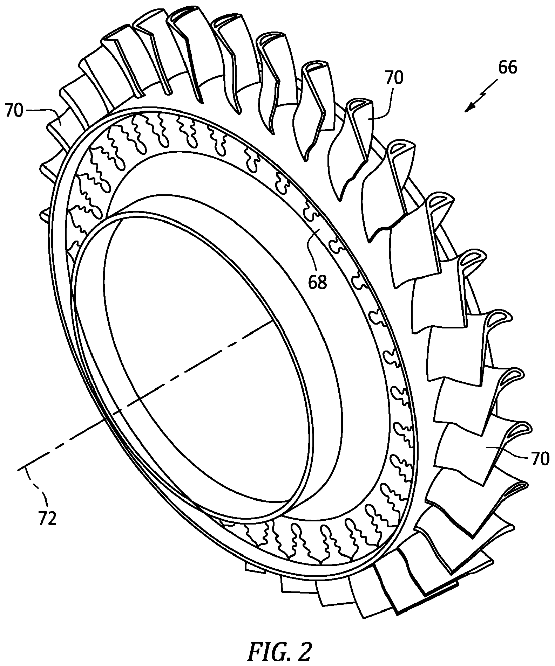

FIG. 2 illustrates a perspective view of an exemplary configuration of a bladed rotor 66. The bladed rotor 66 of FIG. 2 may be similar to the bladed rotors 50, 52, 56, 58, 60 of the gas turbine engine 20 of FIG. 1. The bladed rotor 66 of FIG. 2 includes a disk 68 and a plurality of blades 70. The disk 68 extends circumferentially about (e.g., completely around) an axial centerline 72 (e.g., a rotational axis). The plurality of blades 70 are circumferentially distributed about the disk 68. The plurality of blades 70 are mounted to the disk 68 (e.g., to a radial periphery of the disk 68). For example, each of the plurality of blades 70 may be positioned within an axially extending slot (e.g., a dovetail slot) formed by the disk 68. The present disclosure, however, is not limited to any particular mounting configuration of the plurality of blades 70 on the disk 68.

After a duration of bladed rotor operation (e.g., operation of the bladed rotors 50, 52, 56, 58, 60 of the gas turbine engine 20 of FIG. 1), periodic inspections or maintenance may be performed to evaluate and/or repair the rotor blades of a bladed rotor. Maintenance personnel may inspect the rotor blades to identify any rotor blades which have failed and may require replacement with new rotor blades. During this process, some or all of the rotor blades may be removed from a rotor disk of the bladed rotor. Some or all of the removed rotor blades may be identified as acceptable for continued operation, but these removed rotor blades may be reinstalled onto the rotor disk at different positions (e.g., different circumferential slot positions). In some cases, rotor blades may not be serialized. For example, rotor blades may not include serial numbers, barcodes, or other visually identifiable markings to facilitate identification of individual blades by maintenance personnel. Additionally or alternatively, the installation positions of rotor blades on the rotor disk may not be recorded by maintenance personnel subsequent to installation of the new or otherwise acceptable rotor blades. Because the rotor blades for a bladed rotor may be tracked during installation, removal, repair, and/or inspection, it may be difficult to accurately determine how long a particular rotor blade has been in operational use on a bladed rotor.

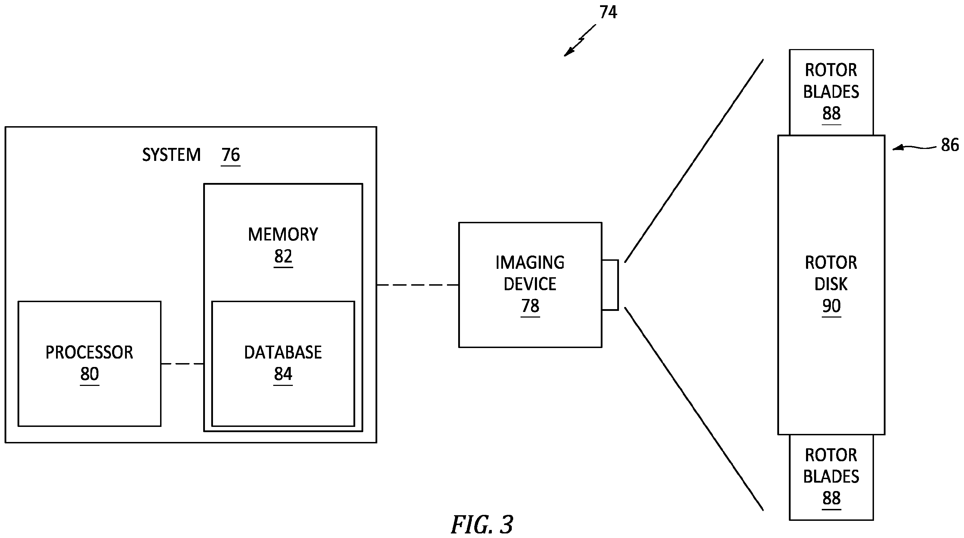

FIG. 3 illustrates a block diagram depicting a component tracking assembly 74 for recording component replacement data. The component tracking assembly 74 of FIG. 3 includes a processing system 76 and an imaging device 78. FIG. 3 additionally illustrates a component assembly including a plurality of components. The component tracking assembly 74 of FIG. 3 is configured to capture and process image data associated with the component assembly, as will be discussed in further detail. The component assembly of FIG. 3 includes a bladed rotor 86 having a plurality of blades 88 (e.g., components) installed on a rotor disk 90. The bladed rotor 86 may have a configuration similar to the bladed rotors 50, 52, 56, 58, 60 66 described above. The present disclosure, however, is not limited to the use of the component tracking assembly 74 for a component assembly including a bladed rotor.

The processing system 76 includes a processor 80 connected in signal communication with memory 82. The processor 80 may include any type of computing device, computational circuit, processor(s), CPU, computer, or the like capable of executing a series of instructions that are stored in the memory 82. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the component tracking assembly 74 to accomplish the same algorithmically and/or by coordination of components of the component tracking assembly 74. The memory 82 may include a single memory device or a plurality of memory devices (e.g., a computer-readable storage device that can be read, written, or otherwise accessed by a general purpose or special purpose computing device, including any processing electronics and/or processing circuitry capable of executing instructions). The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly or indirectly coupled to the processing system 76. The processing system 76 may include, or may be in communication with, an input device that enables a user to enter data and/or instructions, and may include, or be in communication with, an output device configured, for example to display information (e.g., a visual display or a printer), or to transfer data, etc. Communications between the processing system 76 and other electrical and/or electronic components (e.g., controllers, sensors, etc.) may be via a hardwire connection or via a wireless connection. A person of skill in the art will recognize that portions of the processing system 76 may assume various forms (e.g., digital signal processor, analog device, etc.) capable of performing the functions described herein. The processing system 76 may be a single electronic processing unit or, alternatively, may be formed by a plurality of discrete electronic processing units, which discrete electronic control units may be connected in signal communication with one another.

The instructions stored in memory 82 may include, for example, a machine learning algorithm (e.g., a machine learning model) to identify particular rotor blades or other components using visually-distinguishing characteristics of the rotor blades or other components. For example, the machine learning algorithm may be trained using historical image data of a bladed rotor including a plurality of rotor blades (e.g., the bladed rotor 66 of FIG. 2). Visually-distinguishing characteristics of the rotor blades may be flagged (e.g., manually identified) to facilitate training of the machine learning algorithm. Visually-distinguishing characteristics of the rotor blades may include, but are not limited to, rotor blade coloration, rotor blade length, and/or rotor blade shape. Rotor blade coloration, length, and shape may vary over the course of a rotor blade life cycle, for example, due to high-temperature exposure, corrosion, and erosion, but may provide uniquely identifiable characteristics for identifying each rotor blade and distinguishing each rotor blade from other rotor blades (e.g., rotor blades installed on a same rotor disk).

The memory 82 may include a database 84. The database 84 may be configured for storing and/or indexing image data and other characteristic data (e.g., component installation position, component age, component operational time, etc.) for rotor blades or other components.

The imaging device 78 is configured to capture image data (e.g., one or more digital images) of a component assembly and transmit or otherwise provide the captured image data to the processing system 76. The imaging device 78 may be connected in signal communication with the processing system 76 through any wired or wireless connection to transmit the captured image data to the processing system 76. The imaging device 78 may include one or more cameras or other optical imaging devices configured to generate an output signal (e.g., image data) representative of optical characteristics of components of the component assembly. The imaging device 78 may additionally be configured with a polarizing filter and/or other optical filters to reduce glare, improve contrast for image features of interest, and/or to otherwise improve image data quality. The present disclosure, however, is not limited to any particular configuration of the imaging device 78.

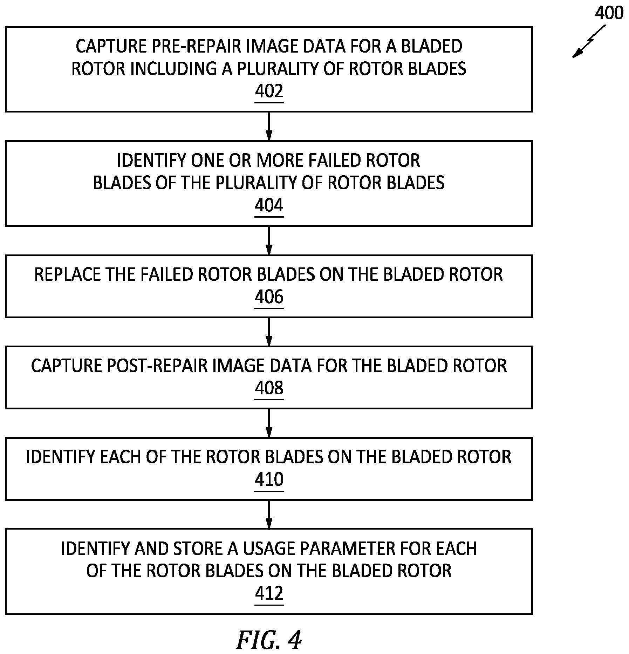

Referring to FIGS. 3 and 4, a Method 400 for recording component replacement data is provided. FIG. 4 illustrates a flowchart for the Method 400. The Method 400 will be described herein with respect to the component tracking assembly 74 and the bladed rotor 86. The processing system 76 (e.g., the processor 80) may be used to execute or control one or more steps of the Method 400 for recording component replacement data for the bladed rotor 86. For example, the processor 80 may execute instructions stored in memory 82, thereby causing the processing system 76 and/or its processor 80 to execute or otherwise control one or more steps of the Method 400. However, it should be understood that the Method 400 is not limited to use with the component tracking assembly 74 or the bladed rotor 86. Unless otherwise noted herein, it should be understood that the steps of Method 400 are not required to be performed in the specific sequence in which they are discussed below and, in some embodiments, the steps of Method 400 may be performed separately or simultaneously.

Step 402 includes capturing imaging data for the bladed rotor 86 and its installed rotor blades 88, for example, by maintenance personnel using the imaging device 78. The image data may be captured prior to or as an initial or early step of a maintenance or inspection process for the bladed rotor 86. This captured image data may be referred to herein as "pre-repair image data." The pre-repair image data captured by the imaging device 78 may be transmitted from the imaging device 78 to the processing system 76 and stored, for example, in the database 84. The pre-repair image data may be captured using a single digital image of the bladed rotor 86 and its rotor blades 88 (e.g., the entire bladed rotor 86 and rotor blades 88). Alternatively, the pre-repair image data may be captured using a plurality of digital images of portions of the bladed rotor and its rotor blades 88.

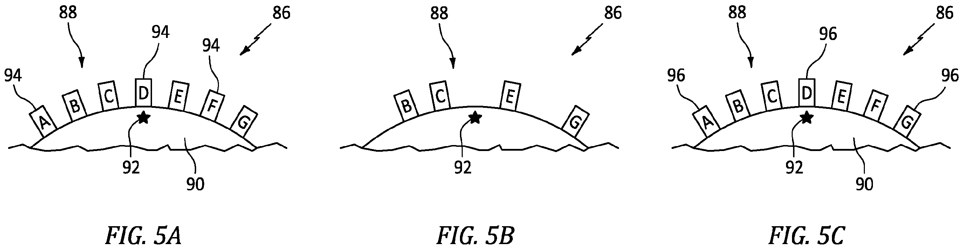

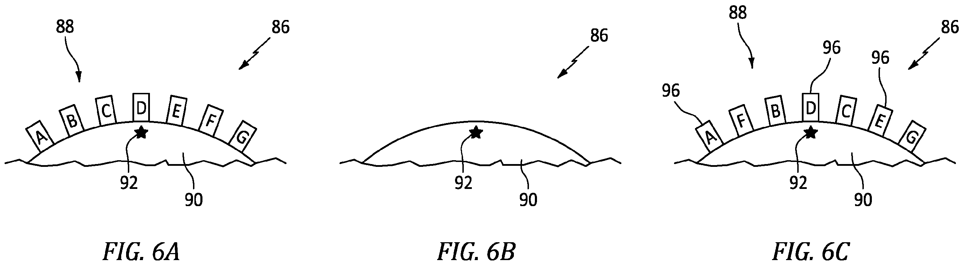

FIGS. 5A-C and 6A-C illustrate a circumferential portion of the bladed rotor 86 for different sequences of at least some of the steps of the Method 400. The portion of the bladed rotor 86 of FIGS. 5A-C and 6A-C includes the rotor blades 88A-G. The rotor disk 90 of FIGS. 5A-C and 6A-C includes a reference point 92. The reference point 92 is a marking on the rotor disk 90 which may be identified by the processing system 76 using the image data captured for the bladed rotor 86. The reference point 92 may be formed by machined, engraved, colored, marked, or otherwise visually distinguishable portion of the rotor disk 90. The position of the reference point 92 may be used by the processing system 76 to identify the circumferential position of each of the rotor blades 88. For example, the processing system 76 may identify a circumferential position of each of the rotor blades 88 on the rotor disk 90 relative to the circumferential position of the reference point 92. The processing system 76 may identify each of the rotor blades 88 (e.g., the rotor blades 88A-G) using the pre-repair image data. The processing system 76 may index each of the identified rotor blades 88 in the database 84 and store, assign, tag, or otherwise identify characteristic data for each of the rotor blades 88 to the respective rotor blade indexed in the database 84. For example, the processing system 76 identify a location (e.g., a circumferential location relative to the reference point 92) for each of the indexed rotor blades in the database 84. For rotor blades 88 which have previously been identified by the processing system 76, the rotor blades 88 may already be indexed in the database 84.

Step 404 includes identifying one or more failed rotor blades 94 of the rotor blades 88 for the bladed rotor 86. The rotor blades 88 may be inspected while installed on the rotor disk 90 and one or more of the rotor blades 88 may be identified (e.g., by maintenance personnel) as the failed rotor blades 94. For example, the rotor blades 88A, 88D, and 88F of FIG. 5A may be identified as failed rotor blades 94 and may be removed from the rotor disk 90 as shown, for example, in FIG. 5B. The other rotor blades 88B, 88C, 88E, and 88G may be identified (e.g., by maintenance personnel) as acceptable for continued operation. Alternatively, with reference to FIGS. 6A-B, the rotor blades 88 (e.g., all of the rotor blades 88) may be removed from the rotor disk 90 and subsequently inspected while removed from the rotor disk 90. One or more of the removed rotor blades 88 may be identified as failed rotor blades 94. The failed rotor blades 94 may be identified, for example, based on visual inspection, measurement, or other qualification process identifying that a shape, size, and/or material condition of a rotor blade does not conform to predetermined acceptance criteria or the rotor blade otherwise appears to be unacceptable for continued operation.

Step 406 includes replacing the rotor blades 88 on the rotor disk 90 to fully assemble the bladed rotor 86. For example, the failed rotor blades 94 removed from the rotor disk 90 may be replaced by new rotor blades 96 of the rotor blades 88, as shown in FIGS. 5B-C. Rotor blades 88 which have been accepted for continued use may be installed on the rotor disk 90 in addition to new rotor blades 96, as shown in FIGS. 6B-C. However, the rotor blades 88 which have been accepted for continued use may be installed into circumferential positions which are different than the circumferential positions of these rotor blades 88 prior to removal (e.g., in the pre-repair image data).

Step 408 includes capturing imaging data for the bladed rotor 86 and its installed rotor blades 88 subsequent to installation of the rotor blades 88 including any new rotor blades 96, for example, by maintenance personnel using the imaging device 78. This captured image data may be referred to herein as "post-repair image data." The post-repair image data captured by the imaging device 78 may be transmitted from the imaging device 78 to the processing system 76 and stored, for example, in the database 84. The post-repair image data may be captured using a single digital image of the bladed rotor 86 and its rotor blades 88 (e.g., the entire bladed rotor 86 and rotor blades 88). Alternatively, the post-repair image data may be captured using a plurality of digital images of portions of the bladed rotor and its rotor blades 88.

Step 410 includes identifying each of the rotor blades 88 and their respective positions (e.g., circumferential positions) on the rotor disk 90. In particular, the processing system 76 (e.g., executing the machine learning algorithm discussed above) may identify replaced rotor blades of the rotor blades 88 using the pre-repair image data and the post-repair image data. The replaced rotor blades include the new rotor blades 94. The replaced rotor blades also include rotor blades 88 which have been installed in a new position (e.g., circumferential position) on the rotor disk 94, relative to their position in the pre-repair image data. The processing system 76 may identify a quantity and a position (e.g., circumferential position) of the replaced rotor blades using the pre-repair image data and the post-repair image data. The processing system 76 may index each of the new rotor blades 94 in the database 84. The processing system 76 may index each of the identified rotor blades 88 in the database 84 and store, assign, tag, or otherwise identify characteristic data for each of the rotor blades 88 to the respective rotor blade indexed in the database 84. In particular, the processing system 76 may update the database 84 to include the position of each of the rotor blades 88 installed on the rotor disk 90 in the post-repair image data. Each of the rotor blades 88 installed on the rotor disk 90 may be identified by the respective visually identifiable markings of each of the rotor blades 88, and the indexed rotor blades in the database 84 corresponding to the respective rotor blades 88 on the rotor disk 90 may be updated to include the current position of the respective rotor blades 88 on the rotor disk 90. For example, for one of the new rotor blades 94, the new rotor blade 94 may be indexed in the database 84 and the position of the new rotor blade 94 may be assigned for the new rotor blade 94 in the database 84. For one of the rotor blades 88 which has been removed and reinstalled on the rotor disk 90, the position of the rotor blade 88 may be updated in the database 84 to include its new position.

Step 412 includes identifying a usage parameter for each of the rotor blades 88 installed on the rotor disk 90. The usage parameter may be, for example, an age of each rotor blade 88 (e.g., a time since rotor blade 88 manufacture), a cumulative amount of time in which each rotor blade 88 has been installed on the rotor disk 90 (or multiple rotor disks 90 if the rotor blade 88 has previously been installed on another rotor disk 90), a cumulative amount of operational time in which each rotor blade 88 has been installed on the rotor disk 90 (or multiple rotor disks 90 if the rotor blade 88 has previously been installed on another rotor disk 90), or another usage parameter which may be used to determine life-cycle depletion of each rotor blade 88. The identified usage parameter for each of the rotor blades 88 installed on the rotor disk 90 may be updated with each inspection and/or replacement cycle for the bladed rotor 86. The identified usage parameter for each of the rotor blades 88 may be used to more accurately identify when the rotor blades 88 are likely to require replacement. Tracking the identified usage parameter for each of the rotor blades 88 may further facilitate development of reliability data (e.g., how long a rotor blade 88 may be operationally used, on average, prior to failure) for particular models, part numbers, and other configurations of the bladed rotor 86 and its rotor blades 88.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts, and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An assembly (74) for recording rotor blade replacement data for bladed rotor (86) of an aircraft gas turbine engine (20), the assembly (74) comprising:
an imaging device (78) configured to capture image data for the bladed rotor (86), the bladed rotor (86) including a plurality of rotor blades (88); and
a processing system (76) including a processor (80) in communication with a non-transitory memory (82) storing instructions, which instructions when executed by the processor (80), cause the processor (80) to:
identify each of the plurality of rotor blades (88) installed on the bladed rotor (86) in pre-repair image data of the captured image data from the imaging device (78) and store a pre-repair position of each of the identified plurality of rotor blades (88) installed on the bladed rotor (86) in the pre-repair image data in the memory (82);
identify each of the plurality of rotor blades (88) installed on the bladed rotor (86) in post-repair image data of the captured image data from the imaging device (78) and store a post-repair position of each of the identified plurality of rotor blades (88) installed on the bladed rotor (86) in the post-repair image data in the memory (82); and
identify at least one replaced rotor blade of the plurality of rotor blades (88) installed on the bladed rotor (86) in the post-repair image data using the pre-repair image data and the post-repair image data.

2. The assembly (74) of claim 1, wherein the instructions, when executed by the processor (80), further cause the processor (80) to index the identified at least one replaced rotor blade in a database (84).

3. The assembly (74) of claim 1 or 2, wherein the instructions, when executed by the processor (80), further cause the processor (80) to store a usage parameter in the database (84) for each of the identified at least one replaced rotor blade.

4. The assembly (74) of any of claims 1 to 3, wherein the instructions, when executed by the processor (80), further cause the processor (80) to store the post-repair position in the database (84) for each of the identified at least one replaced rotor blade.

5. The assembly (74) of any preceding claim, wherein the instructions, when executed by the processor (80), further cause the processor (80) to identify the installation position for each of the identified at least one replaced rotor blade using a reference point (92) of the bladed rotor (86).

6. The assembly (74) of any preceding claim, wherein the instructions, when executed by the processor (80), further cause the processor (80) to identify the at least one replaced rotor blade using one or more visually-distinguishing characteristics of each of the at least one replaced rotor blade, and the visually-distinguishing characteristics include one or more of a rotor blade coloration, a rotor blade length, or a rotor blade shape.

7. The assembly (74) of any preceding claim, wherein the instructions, when executed by the processor (80), further cause the processor (80) to identify the at least one replaced rotor blade using a machine learning model.

8. The assembly (74) of any preceding claim, wherein the at least one replaced rotor blade includes a new rotor blade (96) and the new rotor blade (96) was not one of the identified plurality of rotor blades (88) installed on the bladed rotor (86) in pre-repair image data.

9. The assembly (74) of any preceding claim, wherein the at least one replaced rotor blade includes a reinstalled rotor blade of the plurality of rotor blades (88), the at least one replaced rotor blade has a first position in the identified plurality of rotor blades (88) installed on the bladed rotor (86) in pre-repair image data, the at least one replaced rotor blade has a second position in the identified plurality of rotor blades (88) installed on the bladed rotor (86) in post-repair image data, and the first position is different than the second position.

10. The assembly (74) of any preceding claim, wherein:
the image data includes a single digital image of the plurality of rotor blades (88); or
the image data includes a plurality of digital images of the plurality of rotor blades (88).

11. A method for recording rotor blade replacement data for bladed rotor (86) of an aircraft gas turbine engine (20), the method comprising:
capturing pre-repair image data of a plurality of rotor blades (88) installed on a bladed rotor (86);
replacing one or more of the plurality of rotor blades (88) installed on the bladed rotor (86);
capturing post-repair image data of a plurality of rotor blades (88) installed on a bladed rotor (86) subsequent to replacing the one or more of the plurality of rotor blades (88) on the bladed rotor (86);
identifying, with a processing system (76), each of the plurality of rotor blades (88) installed on the bladed rotor (86) in post-repair image data; and
recording blade replacement data for the plurality of rotor blades (88) by identifying, with the processing system (76), at least one replaced rotor blade of the plurality of rotor blades (88) installed on the bladed rotor (86) in the post-repair image data using the pre-repair image data and the post-repair image data and indexing the identified at least one replaced rotor blade in a database (84).

12. The method of claim 11, wherein recording the blade replacement data further includes:
storing a usage parameter in the database (84) for each of the identified at least one replaced rotor blade; and/or
storing an installation position in the database (84) for each of the identified at least one replaced rotor blade.

13. The method of claim 11 or 12, further comprising identifying one or more failed rotor blades (94) of the plurality of rotor blades (88) subsequent to capturing the pre-repair image data and prior to capturing the post-repair image data, optionally wherein replacing the one or more of the plurality of rotor blades (88) installed on the bladed rotor (86) includes replacing the one or more failed rotor blades (94).

14. An assembly (74) for recording component replacement data for a component assembly (86) of an aircraft gas turbine engine (20), the assembly (74) comprising:
an imaging device (78) configured to capture image data for the component assembly (86), the component assembly (86) including a plurality of components (88); and
a processing system (76) including a processor (80) in communication with a non-transitory memory (82) storing instructions, which instructions when executed by the processor (80), cause the processor (80) to:
identify each of the plurality of components (88) installed on the component assembly (86) in pre-repair image data of the captured image data from the imaging device (78) and store;
identify each of the plurality of components (88) installed on the component assembly (86) in post-repair image data of the captured image data from the imaging device (78); and
record component replacement data for the plurality of components (88) by identifying at least one replaced component of the plurality of components (88) installed on the component assembly (86) in the post-repair image data using the pre-repair image data and the post-repair image data and indexing the identified at least one replaced component in a database (84) of the memory (82).

15. The assembly (74) of claim 14, wherein:
the instructions, when executed by the processor (80), further cause the processor (80) to store a usage parameter in the database (84) for each of the identified at least one replaced components (88);
the at least one replaced component includes a new component (96) and the new component (96) was not one of the identified plurality of components (88) installed on the component assembly (86) in pre-repair image data; and/or
the at least one replaced component includes a reinstalled component of the plurality of components (88), the at least one replaced component has a first position in the identified plurality of components (88) installed on the component assembly (86) in pre-repair image data, the at least one replaced component has a second position in the identified plurality of components (88) installed on the component assembly (86) in post-repair image data, and the first position is different than the second position.
